(19) Europäisches Patentamt
European Patent Office
Office européen des brevets

(11) **EP 2 436 066 B1**

(12) **EUROPEAN PATENT SPECIFICATION**

(45) Date of publication and mention
of the grant of the patent:
**25.11.2015 Bulletin 2015/48**

(51) Int Cl.:
*C01G 23/00* (2006.01)          *H01M 4/36* (2006.01)
*H01M 4/485* (2010.01)          *H01M 4/58* (2010.01)
*H01M 10/0525* (2010.01)        *C01G 25/00* (2006.01)
*C01G 37/00* (2006.01)

(21) Application number: **10780041.9**

(22) Date of filing: **19.05.2010**

(86) International application number:
**PCT/CN2010/072906**

(87) International publication number:
**WO 2010/135960 (02.12.2010 Gazette 2010/48)**

(54) **TITANIUM SYSTEM COMPOSITE AND THE PREPARING METHOD OF THE SAME**

TITANSYSTEMVERBUNDSTOFF UND VERFAHREN ZU SEINER HERSTELLUNG

SYSTÈME COMPOSITE DE TITANE ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.05.2009  CN 200910107760**

(43) Date of publication of application:
**04.04.2012  Bulletin 2012/14**

(73) Proprietor: **BYD Company Limited
Shenzhen 518118 (CN)**

(72) Inventors:
• **LIU, Guogang
Shenzhen
Guangdong 518118 (CN)**
• **JIANG, Wenfeng
Shenzhen
Guangdong 518118 (CN)**
• **PAN, Fuzhong
Shenzhen
Guangdong 518118 (CN)**
• **XIA, Yu
Shenzhen
Guangdong 518118 (CN)**

• **PAN, Honggu
Shenzhen
Guangdong 518118 (CN)**

(74) Representative: **Hoffmann Eitle
Patent- und Rechtsanwälte PartmbB
Arabellastraße 30
81925 München (DE)**

(56) References cited:
CN-A- 1 495 945          CN-A- 101 038 965
CN-A- 101 060 173        CN-A- 101 060 173
JP-A- 2006 331 942       US-A1- 2006 194 114
US-A1- 2008 138 708      US-A1- 2008 138 708

• KYU-SUNG PARK ET AL: "Nitridation-Driven
Conductive Li4Ti5O12 for Lithium Ion Batteries",
JOURNAL OF THE AMERICAN CHEMICAL
SOCIETY, ACS PUBLICATIONS, US, vol. 130, no.
45, 12 November 2008 (2008-11-12), pages
14930-14931, XP008158216, ISSN: 0002-7863,
DOI: 10.1021/JA806104N [retrieved on
2008-10-15]

**Description**

**BACKGROUND**

The present disclosure generally relates to a titanium system composite and a preparing method of the same.

**Description of the Related Art**

Lithium-ion batteries have been widely used because of their high operating voltage, long cycle life, no memory effect, low self-discharge, and no environmental pollution.

The conventional anode materials for lithium-ion batteries or capacitors in the art are mainly carbon materials such as graphite. But the lithium batteries with a graphite anode have a plurality of disadvantages such as lithium dendrite generation during charging and discharging, which may cause short-circuit of batteries, fire or explosion, and may be react with the electrolyte thus shortening the battery service life.

Lithium titanate can be used as anode material which has no such safety problems, but it is not widely used because of the following disadvantages: 1) lithium titanate has a high electric potential (1.50 Volt (V) vs Li), thus causing the electric potential of the battery high; 2) lithium titanate has a poor electrical conductivity, especially during charging and discharging, and thus the battery prepared has a poor high-rate discharge performance; 3) specific capacity of the lithium titanate material is low (with a theoretical value of just 175 milliampere-hours per gram (mAh/g)); 4) the consistency and processability of the battery are poor; and 5) the lithium titanate material tends to absorb water, and the prepared battery may be easily inflatable.

US 2006/194114 describes a lithium ion battery having a positive electrode including a positive active material made of a transition-metal-containing complex oxide capable of intercalating lithium ions. Provided on the surface of the lithium-containing complex oxide are $Li_2CO_3$, $M1_2CO_3$, and at least one kind of molecules selected from a group represented by R-COOM2. M1 and M2 are selected from H, Na, and Li.

Kyu-Sung Park et al., J. Am. Chem. Soc., 2008, 130 (45), pp 14930-14931 examine the formation of conductive TiN films by nitridation reaction of Li4Ti5O12 with $NH_3$. $NH_3$ decomposes surface $Li_4Ti_5O_{12}$ to conductive TiN at high temperature, and surprisingly, it also modifies the surface structure in a way to accommodate the single phase Li insertion and extraction. The electrochemically induced $Li_{4+\delta}Ti_5O_{12}$ with a TiN coating layer shows great electrochemical properties at high current densities.

**SUMMARY**

The present disclosure is directed to solve at least one of the problems exiting in the prior art. Accordingly, a titanium system composite and its preparing method are provided.

An embodiment of the present disclosure provides a titanium system composite comprising a lithium titanium composite oxide and a lithium compound cladding the lithium titanium composite oxide, wherein based on the total weight of the titanium system composite, the amount of the lithium compound is 0.5 wt % to 30 wt %, and the amount of lithium titanium composite oxide is 70 wt % to 99.5 wt %.

In one embodiment, the lithium compound comprises at least one selected from the group consisting of lithium zirconate, lithium vanadate, lithium metasilicate, lithium manganate, lithium carbonate, lithium phosphate, lithium aluminate, lithium hydrogen phosphate, lithium hydroxide, lithium chlorate, lithium sulfate, lithium molybdate, lithium chloride, lithium borate, lithium citrate, lithium tartrate, lithium acetate, and lithium oxalate.

In one embodiment, the lithium titanium composite oxide may be represented by $Li_xTi_yA_zO_k$, where: A is at least one element selected from the group consisting of Fe, Co, Ni, Mn, Zn, Cu, V, Al, Ca, Mg, Zr, Cr, Sn, Sr or rare earth elements; x, y, z and k satisfy: x+4y+az=2k, in which $0 < x \leq 4$, $0 < y \leq 5, 0 \leq z \leq 5, 0 \leq a \leq 7, 0 < k \leq 12$.

Another embodiment of the present disclosure provides a method for preparing a titanium system composite, comprising steps of: a) providing a colloid mixture including a lithium compound and a solvent; b) mixing a lithium titanium composite oxide with the colloid mixture uniformly and then drying to obtain a composition; c) heating the composition under vacuum or an inert gas atmosphere; and d) cooling and grinding the composition to obtain the titanium system composite.

Yet another embodiment of the present disclosure provides an electrode material for batteries or capacitors, comprising a titanium system composite including a lithium titanium composite oxide and a lithium compound cladding the lithium titanium composite oxide.

Additional aspects and advantages of the embodiments of present disclosure will be given in part in the following descriptions, become apparent in part from the following descriptions, or be learned from the practice of the embodiments of the present disclosure.

## DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

A titanium system composite according to an embodiment of the present disclosure comprises a lithium titanium composite oxide and a lithium compound coated on the lithium titanium composite oxide. Based on the total weight of the titanium system composite, the amount of lithium compound is 0.5 wt % to 30 wt %, particularly 0.5 wt % to 10 wt %, and the amount of the lithium titanium composite oxide is 70 wt % to wt 99.5 %, particularly 90 wt % to 99.5 wt %, thus improving the cycle performance and high temperature storage performance.

The titanium system composite is capable of high-rate charge and discharge in batteries and has more excellent cycle performance and higher safety.

In one embodiment, the lithium compound is one or more selected from the group consisting of lithium zirconate, lithium vanadate, lithium metasilicate, lithium manganate, lithium carbonate, lithium phosphate, lithium, aluminate, lithium hydrogen phosphate, lithium hydroxide, lithium chlorate, lithium sulfate, lithium molybdate, lithium chloride, lithium borate, lithium citrate, lithium tartrate, lithium acetate and lithium oxalate. In one example, the lithium compound is one or more selected from a group consisting of lithium zirconate, lithium metasilicate, lithium aluminate, lithium hydroxide, lithium chlorate, lithium sulfate, lithium borate, lithium citrate, lithium tartrate, lithium acetate and lithium oxalate.

In some embodiments, the lithium compound clads the lithium titanium composite oxide compactly so as to form secondary particles. The secondary particles are spherical or near-spherical particles with an average particle size of 0.1 microns ($\mu$m) to 10 $\mu$m.

In some embodiments, an average particle size of the lithium titanium composite oxide is 0.05 $\mu$m to 10 $\mu$m to further improve the high-rate discharge performance. In some embodiments, the lithium titanium composite oxide is a metal-doped lithium titanate represented by $Li_xTi_yA_zO_k$, where A is at least one element selected from the group consisting of Fe, Co, Ni, Mn, Zn, Cu, V, Al, Ca, Mg, Zr, Cr, Sn, Sr or rare earth elements; the x, y, z and k satisfy: $x+4y+az=2k$, in which $0 < x \leq 4$, $0 < y \leq 5$, $0 \leq z \leq 5$, $0 \leq a \leq 7$, $0 < k \leq 12$.

Another embodiment of the present disclosure provides a method for preparing a titanium system composite comprising steps of: a) providing a colloid mixture including a lithium compound and a solvent; b) mixing a lithium titanium composite oxide with the colloid mixture uniformly and then drying to obtain a composition; c) heating the composition under vacuum or an inert gas atmosphere; and d) cooling and grinding the composition to obtain the titanium system composite.

In some embodiments, the solvent is one or more selected from alcohols, ketones, ethers or water.

In some embodiments, the lithium compound comprises at least one selected from the group consisting of lithium zirconate, lithium vanadate, lithium metasilicate, lithium manganate, lithium carbonate, lithium phosphate, lithium aluminate, lithium hydrogen phosphate, lithium hydroxide, lithium chlorate, lithium sulfate, lithium molybdate, lithium chloride, lithium borate, lithium citrate, lithium tartrate, lithium acetate, and lithium oxalate.

In other embodiments, the lithium compound is prepared from a lithium source and a compound source. That to say, the lithium compound can be provided by adding lithium source and compound source into the solvent. In one instance, the lithium source includes one or more members selected from the group consisting of LiCl, LiOH, $LiNO_3$, $CH_3COOLi$, $Li_2O$, and $Li_2O_2$; and the compound source includes one or more members selected from the group consisting of: a) acetate, nitrate, halide, phosphate or ammonium salts of the metal elements selected from Zr, V, Mn, Al and Mo; b) oxide of the metal elements selected from Zr, V, Mn, Al and Mo; and c) oxide of the nonmetal elements selected from Si, B and P.

In some embodiments, the molar ratio of the colloid mixture to the lithium titanium composite oxide is about 0.2:100 to about 165:100. In other embodiments, the molar ratio of the compound source to the lithium source is about 5 : 1 to about 1 : 2.

In some embodiments, the lithium titanium composite oxide is represented by $Li_xTi_yA_zO_k$, where: A is at least one element selected from a group consisting of Fe, Co, Ni, Mn, Zn, Cu, V, Al, Ca, Mg, Zr, Cr, Sn, Sr or rare earth elements; x, y, z and k satisfy: $x+4y+az=2k$, in which $0 < x \leq 4$, $0 < y \leq 5$, $0 \leq z \leq 5$, $0 \leq a \leq 7$, $0 < k \leq 12$.

In some embodiments, the amount of the solvent is not specially limited, and the colloid mixture can be prepared by controlling pH value of the mixture using a variety of acidic, basic or neutral solutions well known in the art. In some embodiments, the pH value of the colloid mixture may be controlled generally as about 3 to 14 with different solutions by, for example, slowly adding proper ammonia while stirring.

In some embodiments, the heat treating such as tempering may be performed at a temperature of about 100°C to about 1000°C, particularly about 300°C to about 1000°C for about 0.5 to about 48 hours. The heat treating may comprise a high temperature drying or annealing step depending on the raw materials added, particularly a high temperature annealing step so as to provide a compact cladding layer.

Yet another embodiment of the present disclosure provides an electrode material for batteries or capacitors comprising a titanium system composite including a lithium titanium composite oxide and a lithium compound cladding the lithium titanium composite oxide.

The titanium system composite can be used in batteries or capacitors. In some examples, the titanium system composite is used as an anode active material for a lithium battery, the cathode active material of the lithium battery can be any well-known material in the art such as one or more of $LiNi_xCo_yMn_zO_2$ ($0 \leq x \leq 1$; $0 \leq y \leq 1$; $0 \leq z < 1$), $LiFePO_4$, $LiCoPO_4$, $LiNiPO_4$, $Li_3V_2(PO_4)_3$ or $LiMnPO_4$. In some examples, the electrolyte solution for the lithium battery may be any well-known nonaqueous electrolyte solution in the art and may comprise a lithium compound and a non-aqueous solvent. The electrolyte lithium compound may be one or more of various lithium salts in the art including lithium hexafluorophosphate, lithium tetrafluoroborate, lithium hexafluoroarsenate, lithium perchlorate, lithium trifluoromethylsulfonate, lithium perfluorobutane sulfonate, lithium aluminate, lithium chloroaluminate, lithium bis(trifluoromethane sulfonimide), lithium bis(oxalate)borate, lithium chloride and lithium iodide. The non-aqueous solvent may be one or more of various non-aqueous solvents in the art including catenary carbonates, such as methyl ethyl carbonate, methyl propyl carbonate, and dipropyl carbonate; cyclic carbonates, such as γ-butyrolactone; carboxylic esters; cyclic ethers; catenary ethers; anhydrides, amides, such as N,N-dimethylformamide and N-methyl acetamide; and other organic solvents having fluorine, nitrogen and sulfur, such as N-methyl pyrrolidone, acetonitrile, dimethyl sulfoxide, sulfolane, and diethyl sulfite.

The following examples provide additional explanations of the embodiments of the present disclosure.

EXAMPLE 1

(1) Preparation of a titanium system composite

24.14 g of $ZrO_2$ and 14.48 g of $Li_2CO_3$ were added to an ethanol-water mixed solvent with a volume ratio of about 1:1, and stirred for about 1 hour to obtain a mixture. 970 g of a $Li_3Ti_3Cr_3O_{12}$ lithium titanium composite oxide powder with a particle size $D_{50}$ of about 1.5 μm was then added to the mixture, and the solution was subsequently heated to about 80°C and stirred until the mixture was dried.

The dried mixture was baked in an oven at about 800°C under vacuum for about 24 hours, then cooled to the room temperature, and finally washed and dried to obtain a titanium system composite with a particle size $D_{50}$ of about 2.0 μm, in which $Li_3Ti_3Cr_3O_{12}$ was clad with 3% lithium zirconate.

(2) Preparation of an electrode and a battery

A mixture containing the titanium system composite, acetylene black, and an adhesive according to a weight ratio of about 85:5:10 was prepared, coated on an aluminum or copper foil, dried at 120°C in a vacuum oven for about 4 hours, and then pressed to form a negative electrode.

A mixture containing $LiFePO_4$, acetylene black, and an adhesive NMP according to a weight ratio of about 100:5:5 was prepared, coated on an aluminum foil, dried at 120°C in a vacuum oven for about 4 hours, and then pressed to form a positive electrode.

The negative electrode and the positive electrode together with a polypropylene or polyethylene separator were wound to form a square battery core, which was placed within a prismatic battery shell. An electrolyte solution 1M $LiPF_6$ EC/EMC/DMC (with a weight ratio of about 1:1:1) was filled into the shell and sealed in the condition of dryness to provide a lithium-ion battery.

The lithium-ion battery produced was labeled as C1.

EXAMPLE 2

(1) Preparation of a titanium system composite

23.2 g of $Al_2O_3$ was added to an acetone-water mixed solvent with a volume ratio of about 1:1, and stirred in a reactor into a uniform slurry, the slurry was heated to about 90°C, about 4.7 g of $LiOH·H_2O$ according to a mole ratio of $LiOH·H_2O:Al_2O_3$ of about 2:1 was then added to the slurry. After being stirred uniformly and heated at about 100°C for 2 hours, 970 g of a lithium titanate powder with a particle size $D_{50}$ of about 1.0 μm was added to obtain, the slurry was subsequently heated to about 80°C to obtain a mixture and stirred to until the mixture was dried.

The dried mixture was baked in an oven at about 800°C under an argon atmosphere for about 24 hours, then cooled slowly to the room temperature, and finally washed and dried to obtain a titanium system composite with a particle size D50 of about 1.8 μm, in which $Li_3Ti_3Cr_3O_{12}$ was clad with 3% lithium aluminate.

(2) Preparation of an electrode and a battery

The preparation of the electrode and the battery in Example 2 was substantially similar to that in Example 1, except that the lithium compound was lithium aluminate.

The lithium-ion battery produced was labeled as C2.

EXAMPLE 3

(1) Preparation of a titanium system composite

30 g of lithium hydroxide was added to an acetone-water mixed solvent with a volume ratio of about 1:1, and then stirred in a reactor into a uniform slurry. After being stirred uniformly and heated to about 60°C for 2 hours, 970 g of a lithium titanate powder with a particle size D50 of about 2.1 $\mu$m was added to the slurry. The slurry was subsequently heated to about 100 °C to obtain a mixture and stirred to until the mixture was dried. The dried mixture was cooled slowly to the room temperature, and washed and dried, and finally ball milled to obtain a titanium system composite with a particle size D50 of about 2.5 $\mu$m, in which $Li_3Ti_3Cr_3O_{12}$ was clad with 3% lithium hydroxide.

(2) Preparation of an electrode and a battery

The preparation of the electrode and the battery in Example 3 was substantially similar to that in Example 1, except that the lithium compound was lithium hydroxide.

The lithium-ion battery produced was labeled as C3.

EXAMPLE 4

(1) Preparation of a titanium system composite

30 g of lithium citrate was added to an acetone-water mixed solvent with a volume ratio of about 1:1, and then stirred in a reactor into a uniform slurry. After being stirred uniformly and heated to about 60°C for 2 hours, 1000 g of a lithium titanate powder with a particle size D50 of about 3.4 $\mu$m was added, the slurry was subsequently heated to about 100°C to obtain a mixture and stirred to until the mixture was dried. The dried mixture was cooled slowly to the room temperature, and washed and dried, and finally ball milled to obtain a titanium system composite with a particle size D50 of about 4.1 $\mu$m, in which $Li_3Ti_3Cr_3O_{12}$ was clad with 3% lithium citrate.

(2) Preparation of an electrode and a battery

The preparation of the electrode and the battery in Example 4 was substantially similar to that in Example 1, except that the lithium compound was lithium citrate.

The lithium-ion battery produced was labeled as C4.

EXAMPLE 5

(1) Preparation of a titanium system composite

19.45 g of LiOH was added to an acetone-water mixed solvent with a volume ratio of about 1:1, and a $CO_2$ gas was slowly passed into the mixture until the pH of the solution reached 9.0. After adding 1000 g of a lithium titanate powder with a particle size D50 of about 5.3 $\mu$m, the mixture was heated to about 60°C to obtain a mixture and stirred to until the mixture was dried. The dried mixture was tempered in an oven at about 800°C under vacuum for about 24 hours, and then cooled slowly to the room temperature, and washed and dried to obtain a titanium system composite with a particle size D50 of about 6.2 $\mu$m, in which $Li_3Ti_3Cr_3O_{12}$ was clad with 3% lithium carbonate.

(2) Preparation of an electrode and a battery

The preparation of the electrode and the battery in Example 5 was substantially similar to that in Example 1, except that the lithium compound was lithium carbonate.

The lithium-ion battery produced was labeled as C5.

EXAMPLE 6

The steps in Example 6 were substantially similar to those in Example 1 except that: 4.02 g of $ZrO_2$ and 2.41 g of $Li_2CO_3$ were used to obtain a titanium system composite with a particle size D50 of about 1.0 $\mu$m in, which $Li_3Ti_3Cr_3O_{12}$ was clad with 0.5% lithium zirconate.
The lithium-ion battery produced was labeled as C6.

EXAMPLE 7

The steps in Example 7 were substantially similar to those of Example 1 except that: 72.42 g of $ZrO_2$ and 43.44 g of $Li_2CO_3$ were used to obtain a titanium system composite with a particle size D50 of about 3.7 $\mu$m, in which $Li_3Ti_3Cr_3O_{12}$ was clad with 9% lithium zirconate.
The lithium-ion battery produced was labeled as C7.

EXAMPLE 8

The steps in Example 8 were substantially similar to those in Example 1 except that: 201.17 g of $ZrO_2$ and 120.67 g of $Li_2CO_3$ were used to obtain a titanium system composite with a particle size D50 of about 6.4 $\mu$m, in which $Li_3Ti_3Cr_3O_{12}$ was clad with 25% lithium zirconate.
The lithium-ion battery produced was labeled as C8.

COMPARATIVE EXAMPLE 1

(1) Preparation of a titanium system composite

A titanium system composite was obtained in which $Li_3Ti_3Cr_3O_{12}$ was clad with 3% carbon.

(2) Preparation of an electrode and a battery

The steps of preparation of the electrode and battery were substantially similar to those in Example 1, except that the cladding layer comprised carbon.
The lithium-ion battery produced was labeled as D1.

TEST

1. Capacity test

At 25°C, batteries C1-C8 and D1 were charged at a current of 0.05 C for 4 hours, charged at a current of 0.1 C for 6 hours to a voltage of 2.5 V, charged at a constant voltage of 2.5V to a cut-off current of 10 mA, and discharged at a constant current of 1 C to a cut-off voltage of 1.3 V. After the end of the 0.05 C charge, the thickness and the initial discharge capacity of the batteries were recorded in Table 1.

2. Cycle performance test

At 25°C, batteries C1-C8 and D1 were charged and then discharged at a current of 1 C and a voltage of about 1.2-2.8 V. Such a cycle was repeated for 300 times. The capacity of the batteries and the thickness at the middle of the batteries before and after the 300 cycles were recorded, and the capacity retention rate of the batteries were calculated according to the following equation:

$$\text{Capacity retention rate} = (\text{discharge capacity after the 300th cycle/discharge capacity of the first cycle}) \times 100\,\%.$$

The thickness change rate of the batteries were calculated according to the following equation:

$$\text{Thickness change rate} = (\text{thickness after the 300th cycles/initial thickness} - 1) \times 100\,\%.$$

The results were recorded in Table 1.

3. High temperature storage performance test

At 25°C, batteries C1-C8 and D1 were charged and then discharged at a current of 1 C and a voltage of about 1.2-2.8 V, and the capacity of the batteries and the thickness (mm) at the middle of the batteries were recorded, and then batteries C1-C8 and D1 were charged to a voltage of 2.8 V. The batteries were stored at 60°C for 7 days, and the capacity and the thickness of the batteries were recorded again.

The results were shown in Table 1.

Table 1

| Battery | Initial Discharge Capacity / mAh | Discharge Capacity Retention Rate at 25°C after 300 cycles (%) | Thickness Change Rate at 25 °C after 300 cycles (%) | Thickness Change Rate at 60°C after 7 days (%) | Initial Discharge Capacity Retention Rate at 60°C after 7 days (%) |
|---|---|---|---|---|---|
| C1 | 601 | 99.3 | 8.6 | 10.3 | 97.3 |
| C2 | 605 | 99.2 | 9.0 | 10.9 | 98.0 |
| C3 | 593 | 98.1 | 8.5 | 9.8 | 96.5 |
| C4 | 590 | 97.9 | 8.7 | 9.7 | 97.0 |
| C5 | 575 | 98.9 | 9.5 | 10.0 | 97.5 |
| C6 | 578 | 97.0 | 9.8 | 9.9 | 97.0 |
| C7 | 591 | 99.4 | 8.9 | 10.2 | 96.8 |
| C8 | 582 | 97.9 | 8.0 | 10.0 | 96.0 |
| D1 | 580 | 90.2 | 20.5 | 30.4 | 86.6 |

4. High-rate charge and discharge performance test

At 25°C, batteries C1-C8 and D1 were charged at a current of about 0.2C, 1C, 5C, and 10C and a voltage of about 1.2-2.8 V to about 2.8 V. The charge capacity of the batteries were recorded and the charge capacity rate of the batteries were calculated. The results were shown in Table 2.

At 25°C, batteries C1-C8 and D1 were charged at a current of about 0.02 C and a voltage of about 1.2-2.8 V to about 2.8 V, and then charged at a constant voltage of 2.8 V to a cut-off current of 10 mA, and finally discharged at 0.2 C, 1C, 5C, and 10C to a cut-off voltage of 2.8 V respectively. The discharge capacity of the batteries were recorded and the discharge capacity rate of the batteries were calculated. The results were shown in Table 2.

$$\text{Charge capacity rate} = (\text{charge capacity at different current}/0.2 \text{ C charge capacity}) \times 100\ \%.$$

$$\text{Discharge capacity rate} = (\text{discharge capacity at different current}/0.2 \text{ C discharge capacity}) \times 100\ \%.$$

Table 2

| Battery | charge capacity at 0.2 C (mAh) | charge capacity at 1 C / charge capacity at 0.2C (%) | charge capacity at 5 C / charge capacity at 0.2C (%) | charge capacity at 10 C / charge capacity at 0.2C (%) | discharge capacity at 0.2 C (mAh) | discharge capacity at 1 C / discharge capacity at 0.2C (%) | discharge Capacity at 5 C / discharge capacity at 0.2C (%) | discharge capacity at 10 C / discharge capacity at 0.2C (%) |
|---|---|---|---|---|---|---|---|---|
| C1 | 595 | 95.2 | 75.4 | 60.3 | 590 | 96.8 | 92.5 | 85.6 |

(continued)

| Battery | charge capacity at 0.2 C (mAh) | charge capacity at 1 C / charge capacity at 0.2C (%) | charge capacity at 5 C / charge capacity at 0.2C (%) | charge capacity at 10 C / charge capacity at 0.2C (%) | discharge capacity at 0.2 C (mAh) | discharge capacity at 1 C / discharge capacity at 0.2C (%) | discharge Capacity at 5 C / discharge capacity at 0.2C (%) | discharge capacity at 10 C / discharge capacity at 0.2C (%) |
|---|---|---|---|---|---|---|---|---|
| C2 | 598 | 95.8 | 75.1 | 60.2 | 591 | 96.0 | 92.6 | 84.9 |
| C3 | 590 | 96.0 | 74.6 | 59.6 | 581 | 95.8 | 91.0 | 85.0 |
| C4 | 580 | 94.9 | 73.5 | 58.4 | 578 | 94.9 | 91.5 | 86.0 |
| C5 | 582 | 95.7 | 73.9 | 59.0 | 580 | 95.6 | 90.9 | 85.7 |
| C6 | 576 | 94.5 | 75.8 | 60.5 | 571 | 94.5 | 90.2 | 81.6 |
| C7 | 582 | 96.5 | 74.5 | 58.9 | 581 | 95.7 | 91.7 | 84.9 |
| C8 | 585 | 90.2 | 70.8 | 50.8 | 584 | 91.2 | 90.0 | 82.0 |
| D1 | 575 | 85.6 | 32.0 | 15.8 | 572 | 90.4 | 86.1 | 51.8 |

It can be seen from the results in Tables 1 - 2 that the batteries C1-C8 have better security and batter high-rate discharge performance than the battery D1.

Although explanatory embodiments have been shown and described, it would be appreciated by those skilled in the art that changes, alternatives, and modifications all falling into the scope of the claims and their equivalents can be made in the embodiments without departing from spirit and principles of the disclosure.

## Claims

1. A titanium system composite, comprising:

   a lithium titanium composite oxide; and
   a lithium compound cladding the lithium titanium composite oxide;
   **characterised by** that based on the total weight of the titanium system composite, the amount of the lithium compound is 0.5 wt % to 30 wt %, and the amount of lithium titanium composite oxide is 70 wt % to 99.5 wt %.

2. The titanium system composite according to claim 1, wherein the lithium compound comprises at least one selected from the group consisting of lithium zirconate, lithium vanadate, lithium metasilicate, lithium manganate, lithium carbonate, lithium phosphate, lithium aluminate, lithium hydrogen phosphate, lithium hydroxide, lithium chlorate, lithium sulfate, lithium molybdate, lithium chloride, lithium borate, lithium citrate, lithium tartrate, lithium acetate, and lithium oxalate.

3. The titanium system composite according to claim 1, wherein the titanium system composite isa substantially spherical particle with an average particle size of 0.1 $\mu$m to 10 $\mu$m.

4. The titanium system composite according to claim 1, wherein based on the total weight of the titanium system composite, the amount of the lithium compound is wt 0.5 % to 10 wt %, and the amount of lithium titanium composite oxide is 90 wt % to 99.5 wt %.

5. The titanium system composite according to claim 1, wherein an average particle size of the lithium titanium composite oxide is 0.05$\mu$m to 10 $\mu$m.

6. The titanium system composite according to claim 1, wherein the lithium titanium composite oxide is represented by $Li_xTi_yA_zO_k$, where: A is at least one element selected from the group consisting of Fe, Co, Ni, Mn, Zn, Cu, V, Al, Ca, Mg, Zr, Cr, Sn, Sr or rare earth elements; x, y, z and k satisfy: x+4y+az=2k, in which $0<x\leq4, 0<y\leq 5, 0 \leq z \leq 5, 0 \leq a \leq 7, 0 < k \leq 12$.

7. A method for preparing a titanium system composite of claim 1, comprising steps of:

   a) providing a colloid mixture including a and a solvent;
   b) mixing a lithium titanium composite oxide with the colloid mixture uniformly and then drying to obtain a composition;
   c) heating the composition under vacuum or an inert gas atmosphere; and
   d) cooling and grinding the composition to obtain the titanium system composite.

8. The method according to claim 7, wherein the solvent is at least one selected from the group consisting of alcohols, ketones, ethers, and water.

9. The method according to claim 7, wherein the lithium compound is prepared from a lithium source and a compound source, wherein the lithium source includes at least one selected from the group consisting of $LiCl$, $LiOH$, $LiNO_3$, $CH_3COOLi$, $Li_2O$, and $Li_2O_2$.

10. The method according to claim 9, wherein the compound source includes at least one selected from a group consisting of: a) acetate, nitrate, halide, phosphate or ammonium salts of the metal elements selected from Zr, V, Mn, Al and Mo; b) oxide of the metal elements selected from Zr, V, Mn, Al and Mo; and c) oxide of the nonmetal elements selected from Si, B and P.

11. The method according to claim 7, wherein the lithium titanium composite oxide is represented by $Li_xTi_yA_zO_k$, where: A is at least one element selected from a group consisting of Fe, Co, Ni, Mn, Zn, Cu, V, Al, Ca, Mg, Zr, Cr, Sn, Sr or rare earth elements; x, y, z and k satisfy: $x+4y+az=2k$, in which: $0<x\leq4,0<y\leq5,0\leq z\leq5,0\leq a\leq7,0<k\leq12$.

12. The method according to claim 7, wherein a molar ratio of the colloid mixture to the lithium titanium composite oxide is 0.2:100 to 165:100.

13. The method according to claim 7, wherein the heating step is performed at a temperature of 100°C to 1000°C for 0.5 hours to 48 hours.

14. An electrode material for batteries or capacitors, comprising a titanium system composite including a lithium titanium composite oxide and a lithium compound cladding the lithium titanium composite oxide **characterised by** that based on the total weight of the titanium system composite, the amount of the lithium compound is 0.5 wt % to 30 wt %, and the amount of lithium titanium composite oxide is 70 wt % to 99.5 wt %.

**Patentansprüche**

1. Titansystem-Verbundmaterial, umfassend:

   ein Lithium-Titan-Mischoxid; und
   eine Lithiumverbindung, die das Lithium-Titan-Mischoxid überzieht;
   **dadurch gekennzeichnet, dass** auf Basis des Gesamtgewichts des Titansystem-Verbundmaterials die Menge der Lithiumverbindung 0,5 Gew.% bis 30 Gew.% beträgt, und die Menge des Lithium-Titan-Mischoxids 70 Gew.% bis 99,5 Gew.% beträgt.

2. Titansystem-Verbundmaterial gemäß Anspruch 1, worin die Lithiumverbindung mindestens eine, ausgewählt aus der Gruppe bestehend aus Lithiumzirkonat, Lithiumvanadat, Lithiummetasilikat, Lithiummanganat, Lithiumcarbonat, Lithiumphosphat, Lithiumaluminat, Lithiumhydrogenphosphat, Lithiumhydroxid, Lithiumchlorat, Lithiumsulfat, Lithiummolybdat, Lithiumchlorid, Lithiumborat, Lithiumcitrat, Lithiumtartrat, Lithiumacetat und Lithiumoxalat, umfasst.

3. Titansystem-Verbundmaterial gemäß Anspruch 1, worin das Titansystem-Verbundmaterial ein im wesentlichen sphärischer Partikel mit einer mittleren Teilchengröße von 0,1 $\mu$m bis 10 $\mu$m ist.

4. Titansystem-Verbundmaterial gemäß Anspruch 1, worin auf Basis des Gesamtgewichts des Titansystem-Verbundmaterials die Menge der Lithiumverbindung 0,5 bis 10 Gew.% und die Menge des Lithium-Titan-Mischoxids 90 bis 99,5 Gew.% beträgt.

5. Titansystem-Verbundmaterial gemäß Anspruch 1, worin die mittlere Teilchengröße des Lithium-Titan-Mischoxids 0,05 bis 10 $\mu$m beträgt.

6. Titansystem-Verbundmaterial gemäß Anspruch 1, worin das Lithium-Titan-Mischoxid durch $Li_xTi_yA_zO_k$ dargestellt wird, worin: A mindestens ein Element ausgewählt aus der Gruppe bestehend aus Fe, Co, Ni, Mn, Zn, Cu, V, Al, Ca, Mg, Zr, Cr, Sn, Sr oder Seltenerdelementen ist; x, y, z und k: $x + 4y + az = 2k$ erfüllen, worin $0 < x \leq 4$, $0 < y \leq 5$, $0 \leq z \leq 5$, $0 \leq a \leq 7$, $0 < k \leq 12$.

7. Verfahren zur Herstellung eines Titansystem-Verbundmaterials gemäß Anspruch 1, umfassend die folgenden Schritte:

   a) Bereitstellung einer Kolloidmischung, die eine Lithiumverbindung und ein Lösungsmittel einschließt;
   b) gleichförmiges Mischen eines Lithium-Titan-Mischoxids mit der Kolloidmischung, und dann Trocknen, um eine Zusammensetzung zu erhalten;
   c) Erwärmen der Zusammensetzung unter Vakuum oder in Inertgasatmosphäre; und
   d) Kühlen und Mahlen der Zusammensetzung, um das Titansystem-Verbundmaterial zu erhalten.

8. Verfahren gemäß Anspruch 7, worin das Lösungsmittel mindestens eines ausgewählt aus der Gruppe bestehend aus Alkoholen, Ketonen, Ethern und Wasser ist.

9. Verfahren gemäß Anspruch 7, worin die Lithiumverbindung aus einer Lithiumquelle und einer Quelle einer Verbindung hergestellt wird, worin die Lithiumquelle mindestens eine ausgewählt aus der Gruppe bestehend aus LiCl, LiOH, $LiNO_3$, $CH_3COOLi$, $Li_2O$ und $Li_2O_2$ einschließt.

10. Verfahren gemäß Anspruch 9, worin die Quelle der Verbindung mindestens eine ausgewählt aus der Gruppe bestehend aus folgendem einschließt: a) Acetat, Nitrat, Halogenid, Phosphat oder Ammoniumsalze von Metallelementen ausgewählt aus Zr, V, Mn, Al und Mo; b) Oxide der Metallelemente ausgewählt aus Zr, V, Mn, Al und Mo; und c) Oxide der Nicht-Metallelemente, ausgewählt aus Si, B und P.

11. Verfahren gemäß Anspruch 7, worin das Lithium-Titan-Mischoxid durch $Li_xTi_yA_zO_k$ dargestellt wird, worin: A mindestens ein Element ausgewählt aus der Gruppe bestehend aus Fe, Co, Ni, Mn, Zn, Cu, V, Al, Ca, Mg, Zr, Cr, Sn, Sr oder Seltenerdelementen ist; x, y, z und k: $x + 4y + az = 2k$ erfüllen, worin $0 < x \leq 4$, $0 < y \leq 5$, $0 \leq z \leq 5$, $0 \leq a \leq 7$, $0 < k \leq 12$.

12. Verfahren gemäß Anspruch 7, worin das Molverhältnis der Kolloidmischung zum Lithium-Titan-Mischoxid 0,2:100 bis 165:100 beträgt.

13. Verfahren gemäß Anspruch 7, worin der Erwärmungsschritt bei einer Temperatur von 100 bis 1.000°C über 0,5 bis 48 Stunden durchgeführt wird.

14. Elektrodenmaterial für Batterien oder Kondensatoren, das ein Titansystem-Verbundmaterial einschließt, das ein Lithium-Titan-Mischoxid und eine Lithiumverbindung einschließt, die das Lithium-Titan-Mischoxid überzieht, **dadurch gekennzeichnet, dass** auf Basis des Gesamtgewichts des Titansystem-Verbundmaterials die Menge der Lithiumverbindung 0,5 Gew.% bis 30 Gew.% und die Menge des Lithium-Titan-Mischoxids 70 Gew.% bis 99,5 Gew. beträgt.

**Revendications**

1. Système composite de titane, comprenant :

   un oxyde composite de lithium-titane ; et
   un composé de lithium revêtant l'oxyde composite de lithium-titane ;
   **caractérisé en ce que**, sur la base du poids total du système composite de titane, la quantité du composé de lithium est 0,5 % en poids à 30 % en poids, et la quantité de l'oxyde composite de lithium-titane est 70 % en poids à 99,5 % en poids.

2. Système composite de titane selon la revendication 1, dans lequel le composé de lithium comprend au moins un élément choisi parmi le groupe consistant en un zirconate de lithium, un vanadate de lithium, un métasilicate de lithium, un manganate de lithium, un carbonate de lithium, un phosphate de lithium, un aluminate de lithium, un hydrogénophosphate de lithium, un hydroxyde de lithium, un chlorate de lithium, un sulfate de lithium, un molybdate de lithium, un chlorure de lithium, un borate de lithium, un citrate de lithium, un tartrate de lithium, un acétate de lithium et un oxalate de lithium.

3. Système composite de titane selon la revendication 1, dans lequel le système composite de titane est une particule sensiblement sphérique avec une taille moyenne de particule de 0,1 $\mu$m à 10 $\mu$m.

4. Système composite de titane selon la revendication 1, dans lequel, sur la base du poids total du système composite de titane, la quantité du composé de lithium est 0,5 % en poids à 10 % en poids, et la quantité de l'oxyde composite de lithium-titane est 90 % en poids à 99,5 % en poids.

5. Système composite de titane selon la revendication 1, dans lequel une taille moyenne de particules de l'oxyde composite de lithium-titane est 0,05 $\mu$m à 10 $\mu$m.

6. Système composite de titane selon la revendication 1, dans lequel l'oxyde composite de lithium-titane est représenté par $Li_xTi_yA_zO_k$, où : A est au moins un élément choisi dans le groupe consistant en Fe, Co, Ni, Mn, Zn, Cu, V, Al, Ca, Mg, Zr, Cr, Sn, Sr ou des éléments des terres rares ; x, y, z et k satisfont à : x+4y+az=2k, dans laquelle $0 < x \leq 4$, $0 < y \leq 5$, $0 \leq z \leq 5$, $0 \leq a \leq 7$, $0 < k \leq 12$.

7. Procédé de préparation d'un système composite de titane selon la revendication 1, comprenant les étapes de :

   a) préparation d'un mélange colloïdal incluant un composé de lithium et un solvant ;
   b) mélange uniformément d'un oxyde composite de lithium-titane avec le mélange colloïdal, et ensuite séchage pour obtenir une composition ;
   c) chauffage de la composition sous vide ou dans une atmosphère de gaz inerte ; et
   d) refroidissement et broyage de la composition pour obtenir le système composite de titane.

8. Procédé selon la revendication 7, dans lequel le solvant est au moins un solvant choisi dans le groupe consistant en des alcools, des cétones, des éthers et de l'eau.

9. Procédé selon la revendication 7, dans lequel le composé de lithium est préparé à partir d'une source de lithium et d'une source de composé, dans lequel la source de lithium inclut au moins un élément choisi dans le groupe consistant en LiCl, LiOH, $LiNO_3$, $CH_3COOLi$, $Li_2O$ et $Li_2O_2$.

10. Procédé selon la revendication 9, dans lequel la source de composé inclut au moins un élément choisi dans le groupe consistant en : a) des sels d'acétate, de nitrate, d'halogénure, de phosphate ou d'ammonium des éléments métalliques choisis parmi Zr, V, Mn, Al et Mo ; b) un oxyde des éléments métalliques choisis parmi Zr, V, Mn, Al et Mo ; et c) un oxyde des éléments non métalliques choisis parmi Si, B et P.

11. Procédé selon la revendication 7, dans lequel l'oxyde composite de lithium-titane est représenté par $Li_xTi_yA_zO_k$, où : A est au moins un élément choisi dans le groupe consistant en Fe, Co, Ni, Mn, Zn, Cu, V, Al, Ca, Mg, Zr, Cr, Sn, Sr ou des éléments des terres rares ; x, y, z et k satisfont à : x+4y+az=2k, dans laquelle $0 < x \leq 4$, $0 < y \leq 5$, $0 \leq z \leq 5$, $0 \leq a \leq 7$, $0 < k \leq 12$.

12. Procédé selon la revendication 7, dans lequel un rapport molaire du mélange colloïdal sur l'oxyde composite de lithium-titane est 0,2:100 à 165:100.

13. Procédé selon la revendication 7, dans lequel l'étape de chauffage est mise en oeuvre à une température de 100°C à 1 000 °C pendant 0,5 heure à 48 heures.

14. Matériau d'électrode pour batteries ou condensateurs, comprenant un système composite de titane incluant un oxyde composite de lithium-titane et un composé de lithium revêtant l'oxyde composite de lithium-titane, **caractérisé en ce que**, sur la base du poids total du système composite de titane, la quantité du composé de lithium est 0,5 % en poids à 30 % en poids, et la quantité de l'oxyde composite de lithium-titane est 70 % en poids à 99,5 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006194114 A


**Non-patent literature cited in the description**

- **KYU-SUNG PARK et al.** *J. Am. Chem. Soc.,* 2008, vol. 130 (45), 14930-14931